# EUROPEAN PATENT APPLICATION

(11) **EP 3 301 250 A1**
(43) Date of publication of application: **04.04.2018**
(21) Application number: 16823627.1
(22) Date of filing: 06.01.2016
(51) Int. Cl.: E06B 9/40, E06B 9/58, B60J 7/00

(54) **ROLLER BLIND DEVICE FOR AUTOMOBILE SUNROOF**

(30) Priority: 14.07.2015 CN 201510411555
(71) Applicant: Yuqiu Mould Plastics Co., Ltd of Kunshan, Kunshan, Jiangsu 215300 (CN)
(72) Inventor: CHAI, Dingfang, Kunshan Jiangsu 215300 (CN)
(74) Representative: Hryszkiewicz, Danuta
(86) International application number: PCT/CN2016/070308
(87) International publication number: WO 2017/008476

(57) **Abstract**

Provided is a roller blind device for an automobile sunroof, comprising a roller blind cloth (1), a winding guide assembly (2) and a guide rail (3). The winding guide assembly (2) comprises a guide passageway (202) having a deformation part (203). The deformation part (203) can guide and deform a reinforcing band (101) on two sides of the roller blind cloth (1) before it enters a matching rail, and can flip the reinforcing band (101) or separate it from the bottom roller blind cloth (1), thus preventing a situation whereby sliding in the guide rail is not smooth and the strength of the cloth in the fringe area of the roller blind cloth is not enough, leading to pulling not being smooth and even deformation and tearing after long-term use.

## Description

The present disclosure relates to a roller blind device for automobile, and particularly to a roller blind device for automobile sunroof, which belongs to the field of automobile parts.

Conventional automobile sunroofs include a roller blind. When people do not need the sunroof or are unwilling to be exposed under the direct sunlight, the roller blind is unfolded to prevent the interior of an automobile from being exposed under the direct sunlight; and when people need to open the sunroof or want to see the outside of the automobile through the sunroof, the roller blind may be folded to expose the sunroof. The roller blind generally comprises roller blind fabric and a winding device, one end of the roller blind fabric is wound around the winding device, the other end of the roller blind fabric is driven by a motor or pulled by hands through a traction device, and then the roller blind fabric may be pulled out or rewound.

Currently, when existing winding devices are applied to the roller blind fabric, although reinforcing belts are arranged on the two sides of the roller blind fabric, the reinforcing belts are directly wound around the winding device and are pulled out in a main extension direction; guide strips arranged on the reinforcing belts on the two sides of the roller blind fabric generally are ultra-thin flat-shaped metal elastic pieces with memory function, and the guide strips directly contact with a guide rail or the winding device in the winding and pulling procedures, thereby causing pulling and winding to be unsmooth; and meanwhile, in the pulling procedure, the roller blind fabric is straightly pulled, and the strength of the edge fabrics of the roller blind fabric is not enough, so, after being used for a long time, the roller blind fabric is not smooth in pulling, even deforms and tears.

To overcome the foregoing disadvantages of the prior art, the present disclosure provides a roller blind for automobile sunroof.

To achieve the above objectives, the following technical solutions are adopted.

A roller blind device for automobile sunroof comprises a roller blind fabric, a Winding guide assembly and a guide rail; reinforcing belts are respectively formed on two sides of the roller blind fabric in a main extension direction, and each reinforcing belt comprises a guide strip arranged on the roller blind fabric; by taking a central symmetric line of the roller blind fabric in the main extension direction as reference, the Winding guide assembly comprises a winding member and a guide channel, both of which are sequentially arranged in the main extension direction of the roller blind fabric, an entrance end of the guide channel communicates with the bottom of the winding member to form a communication part through which the reinforcing belts winding around the winding member may get into or get out of the guide channel, a deformation part capable of guiding the reinforcing belts to deform is formed in the guide channel, an open slot for guiding the reinforcing belts to get into or get out of a guide rail is formed in an exit end of the guide channel, the opening of the open slot communicates with the bottom of the guide channel in a manner of inclining from the upper part to the lower part and from one side close to the reference line, and an acute angle is formed between the open slot and the bottom of the guide channel; the interior of the guide rail is hollow, a guide rail opening for allowing extending of the roller blind fabric is formed in one side edge, close to the reference line, of the guide rail, and the cross section of the hollow part of the guide rail is larger than and overlapped on the cross section of the open slot of the guide channel; and the reinforcing belts on the roller blind fabric are winding and unwinding around the winding member and get into the guide rail through the open slot after being guided to deform by the guide channel, and the reinforcing belts are guided by the guide rail and slide along the guide rail.

As an improvement, the following technical solutions are employed.

The roller blind device for automobile sunroof is further characterized in that:

The deformation part in the guide channel is an overturning part, and the overturning part communicates with an opening of the open slot after the overturning part is bent upwards from the bottom of the front section of the guide channel and is twisted for a half circle.

The deformation part in the guide channel is a separating part provided with a separating opening, the separating part is arranged at the exit end of the guide channel, and the separating opening and the opening of the open slot are in communication and have the same shape.

The cross section of the guide rail is of a square structure, and the guide rail opening is opened in a side bottom of one side, located towards the reference line, of the square structure.

By taking one side, far away from the reference line, of the guide rail as an outer side, a vertical-surface bulge is formed in an opening of the square structure towards the interior of the opening, a part, corresponding to the vertical-surface bulge, of the bottom edge of the square structure is sunken to form a sunken surface, the edge of the inner side of the sunken surface is protruded to form a circular-arc bulge, the edge of the outer side of the sunken surface extends outwards and then is connected with the outer side edge of the square structure so as to form a horizontal-surface platform, the highest point of the circular-arc bulge is lower than the top surface of the horizontal-surface platform, the sunken surface is located between the circular-arc bulge and the horizontal-surface platform, the guide strips are inclined with the horizontal-surface platform and are propped against the vertical-surface bulge under the traction of the roller blind fabric, and the inclination of each guide strip is equal to the inclination of the open slot in the guide channel.

The guide strips are respectively glued on the upper surface of the two sides of the roller blind fabric in the main extension direction.

By taking the main extension direction of the roller blind fabric as reference, a position relation between the edges of the two sides of the roller blind fabric and the edges of the outer sides of the corresponding guide strips is one of the following position relations: the edges of the two sides of the roller blind fabric are level with the edges of the outer sides of the corresponding guide strips, or the edges of the two sides of the roller blind fabric are protruded out of the edges of the outer sides of the corresponding guide strips, or the edges of the two sides of the roller blind fabric are protruded out of the edges of the outer sides of the corresponding guide strips and tilt up towards the upper surfaces of the corresponding guide strips, or the edges of the two sides of the roller blind fabric are protruded out of the edges of the outer sides of the corresponding guide strips and are folded upwards and then connected with the upper surfaces of the corresponding guide strips.

Connecting fabrics are respectively glued or sewn on the lower surfaces of the two sides of the roller blind fabric in the main extension direction, and the guide strips are glued on the upper surfaces of the connecting fabrics.

By taking the main extension direction of the roller blind fabric as reference, a position relation between the edges of the outer sides of the connecting fabrics and the edges of the outer sides of the corresponding guide strips is one of the following position relations: the edges of the outer sides of the connecting fabrics are leveled with the edges of the outer sides of the guide strips, or the edges of the outer sides of the connecting fabrics are protruded out of the edges of the outer sides of the guide strips, or the edges of the outer sides of the connecting fabrics are protruded out of the edges of the outer sides of the guide strips and tilt up towards the upper surfaces of the guide strips, or the edges of the outer sides of the connecting fabrics are protruded out of the edges of the outer sides of the guide strips and are folded upwards and then connected with the upper surfaces of the guide strips.

The roller blind device for automobile sunroof has the following beneficial effects: the guide channel with the deformation part is additionally arranged on the winding device in the prior art, the deformation part may guide the reinforcing belts on the two sides of the roller blind fabric to deform, and then the deforming reinforcing belts get into the matching guide rail, and the deformation part may overturn the reinforcing belts or separate the reinforcing belts from parts, located at the bottoms of the reinforcing belts, of the roller blind belts, thereby avoiding conditions that the reinforcing belts are not smooth when sliding in the guide rail, and the strength of the edge fabrics of the roller blind fabric is not enough, so that the roller blind fabric is not smooth, even deforms and tears, in a pulling procedure after being used for a long time.
FIG. 1 is a front view of a roller blind device for automobile in Example 1;
FIG. 2 is a top view of a roller blind device for automobile in Example 1;
FIG. 3 is a section view taken from line A-A in FIG. 2;
FIG. 4 is a section view taken from line B-B in FIG. 2;
FIG. 5 is a section view taken from line C-C in FIG. 2;
FIG. 6 is a section view taken from line D-D in FIG. 2;
FIG. 7 is a section view taken from line E-E in FIG. 2;
FIG. 8 is a front view of a roller blind device for automobile in Example 2;
FIG. 9 is a top view of a roller blind device for automobile in Example 2;
FIG. 10 is a section view taken from line A-A in FIG. 9;
FIG. 11 is a section view taken from line B-B in FIG. 9;
FIG. 12 is a section view taken from line C-C in FIG. 9;
FIG. 13 is a section view taken from line D-D in FIG. 9;
FIG. 14 is a section view taken from line E-E in FIG. 9;
FIG. 15 is a sectional view of a roller blind fabric being guided by a guide rail of the present disclosure;
FIG. 16 is a schematic diagram of a winding guide assembly comprising an overturning part of the present disclosure;
FIG. 17 is a schematic diagram of a winding guide assembly comprising a separating part of the present disclosure;
FIG. 18 is a first schematic diagram of a reinforcing belt of the present disclosure;
FIG. 19 is a second schematic diagram of a reinforcing belt of the present disclosure;
FIG. 20 is a third schematic diagram of a reinforcing belt of the present disclosure;
FIG. 21 is a fourth schematic diagram of a reinforcing belt of the present disclosure;
FIG. 22 is a fifth schematic diagram of a reinforcing belt of the present disclosure;
FIG. 23 is a sixth schematic diagram of a reinforcing belt of the present disclosure;
FIG. 24 is a seventh schematic diagram of a reinforcing belt of the present disclosure; and
FIG. 25 is an eighth schematic diagram of a reinforcing belt of the present disclosure.

In the drawings, the following reference numbers are used:
1. Roller blind fabric; 101. Reinforcing belt; 102. Guide strip; 2. Winding guide assembly; 201. Winding member; 202. Guide channel; 203. Deformation part; 203a. Overturning part; 203b. Separating part; 203b1. Separating opening; 204. Open slot; 3. Guide rail; 301. Guide rail opening; 302. Vertical-surface bulge; 303. Sunken surface; 304. Circular-arc bulge; 305. Outer side edge; 306. Horizontal-surface platform; 4. Connecting fabrics.

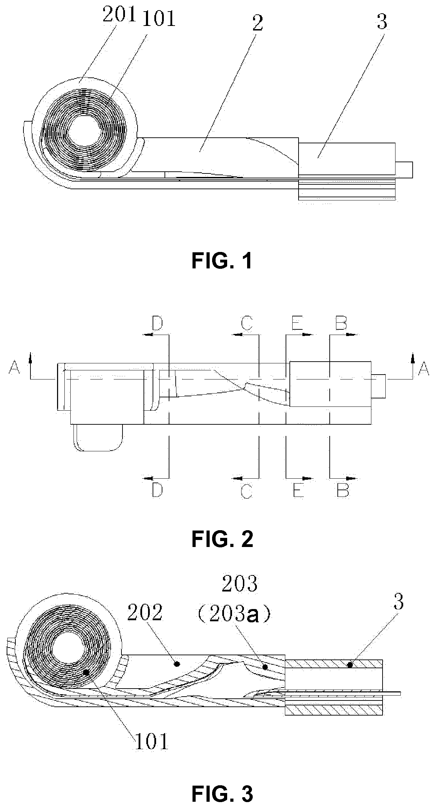

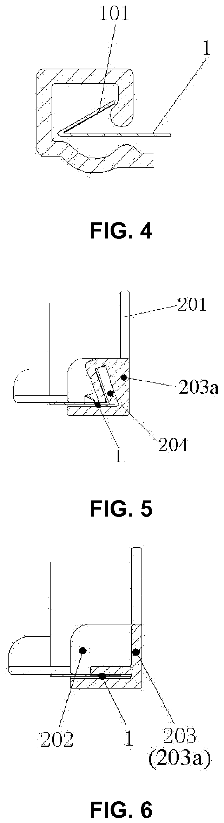

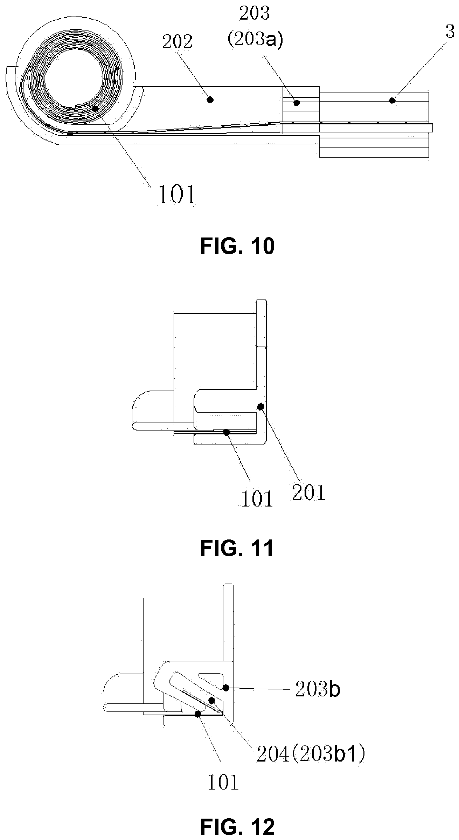

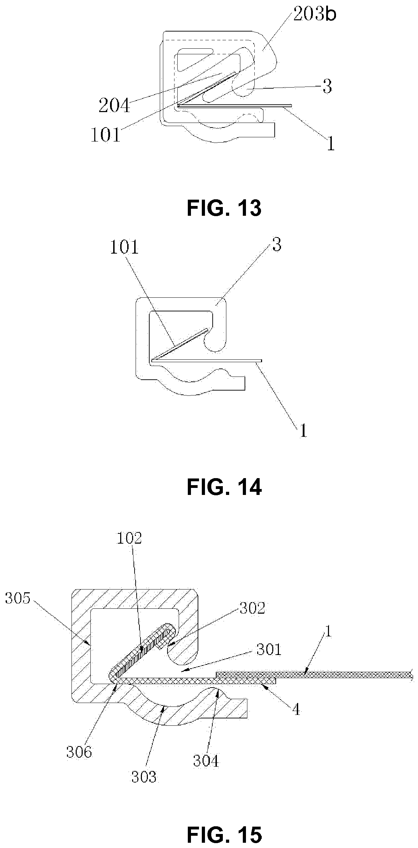

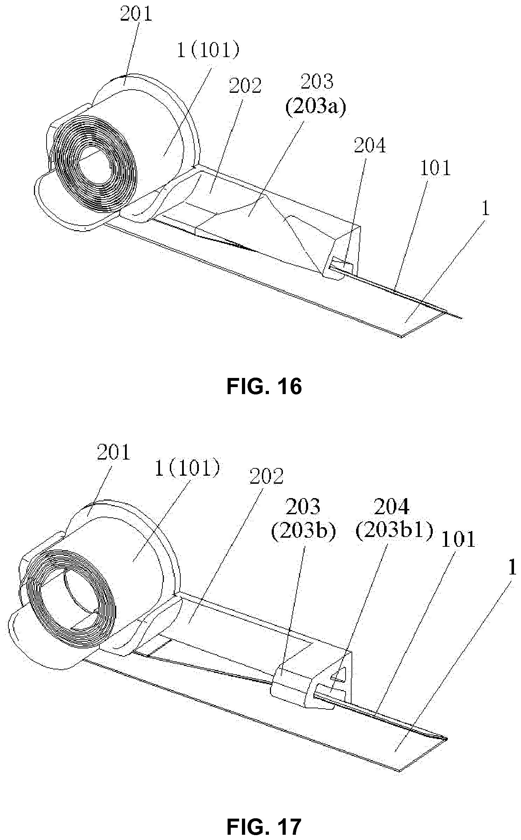

The present disclosure is described below in detail in conjunction with embodiments and accompanying drawings FIG. 1 to FIG. 25.

For further illustrating the invention, experiments detailing a roller blind device for automobile are described below. It should be noted that the following examples are intended to describe and not to limit the invention.

### Example 1: Overturning type roller blind device for automobile sunroof

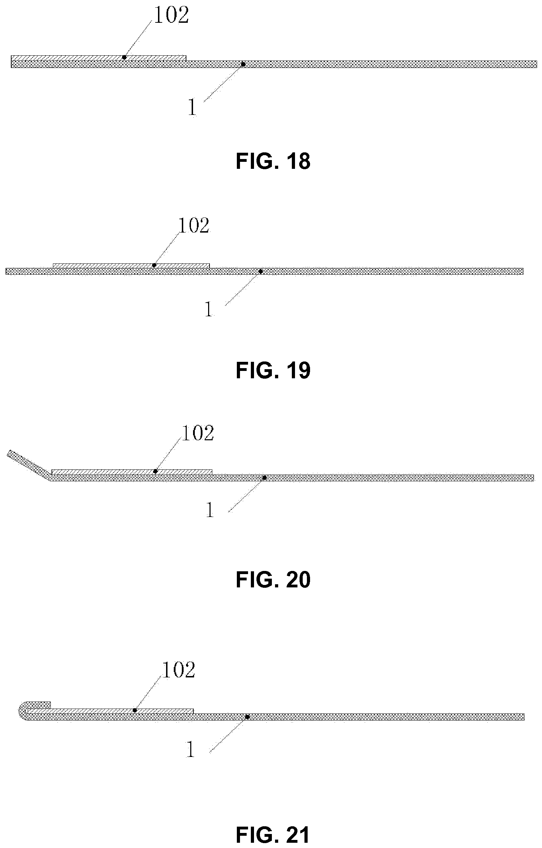

Example 1 is described in conjunction with accompanying drawings FIG. 1 to FIG. 7, and FIG. 16, and the structures of a roller blind fabric and reinforcing belts to be adopted are as shown in FIG. 18.

A roller blind device for automobile sunroof comprises a roller blind fabric 1, reinforcing belts 101 are respectively formed on two sides of the roller blind fabric in a main extension direction, each reinforcing belt 101 comprises a guide strip 102 arranged on the roller blind fabric 1, totally two guide strips 102 are arranged, and the two guide strips 102 are respectively glued on an upper surface at the two sides of the roller blind fabric 1 in the main extension direction. By taking the main extension direction of the roller blind fabric as reference, the edges of the two sides of the roller blind fabric 1 are respectively level with the edges of the outer sides of the corresponding guide strips 102 (or the edges of the two sides of the roller blind fabric are protruded out of the edges of the outer sides of the corresponding guide strips; or the edges of the two sides of the roller blind fabric are protruded out of the edges of the outer sides of the corresponding guide strips and tilt up towards the upper surfaces of the corresponding guide strips; or the edges of the two sides of the roller blind fabric are protruded out of the edges of the outer sides of the corresponding guide strips and are folded upwards and then connected with the upper surfaces of the corresponding guide strips). In order to greatly describe the example, it is utilized that the edges of the two sides of the roller blind fabric are respectively level with the edges of the outer sides of the corresponding guide strips.

A winding guide assembly 2 comprises a winding member 201 and a guide channel 202, both of which are sequentially arranged in the main extension direction of the roller blind fabric, an entrance end of the guide channel communicates with the bottom of the winding member to form a communication part through which the reinforcing belts 101 winding around the winding member may get into or get out of the guide channel 202, and a deformation part 203 capable of guiding the reinforcing belts to deform is formed in the guide channel. In the example, the deformation part 203 is an overturning part 203a (as shown in FIG. 1, FIG. 2, FIG. 3 and FIG. 16), and the overturning part communicates with an opening of an open slot after the overturning part is bent upwards from the bottom of the front section of the guide channel and is twisted for a half circle. The open slot 204 for guiding the reinforcing belts to get into or get out of a guide rail is formed in an exit end of the guide channel, the opening of the open slot communicates with the bottom of the guide channel in a manner of inclining from the upper part to the lower part and from one side close to a reference line, and an acute angle is formed between the open slot and the bottom of the guide channel.

The interior of the guide rail is hollow, a guide rail opening 301 for allowing extending of the roller blind fabric is formed in one side edge, close to the reference line, of the guide rail, and the cross section of the hollow part of the guide rail is larger than and overlapped on the cross section of the open slot of the guide channel; and the reinforcing belts 101 on the roller blind fabric are winding and unwinding around the winding member 201, and get into the guide rail 3 through the open slot 204 after being guided to deform by the guide channel 202, and the reinforcing belts are guided by the guide rail and slide along the guide rail. The cross section of the guide rail 3 is of a square structure (the cross section of the guide rail 3 may also be designed to be other shapes according to actual requirements, such as a triangle shape and the like), and the guide rail opening 301 is opened in a side bottom of one side, located towards the reference line, of the square structure. By taking one side, far away from the reference line, of the guide rail as an outer side, a vertical-surface bulge 302 is formed in an opening of the square structure towards the interior of the opening, a part, corresponding to the vertical-surface bulge, of the bottom edge of the square structure is sunken to form a sunken surface 303, the edge of the inner side of the sunken surface is protruded to form a circular-arc bulge 304, the edge of the outer side of the sunken surface extends outwards and then is connected with the outer side edge 305 of the square structure so as to form a horizontal-surface platform 306, the highest point of the circular-arc bulge is lower than the top surface of the horizontal-surface platform, the sunken surface 303 is located between the circular-arc bulge and the horizontal-surface platform, the guide strips 102 are inclined with the horizontal-surface platform 306 and are propped against the vertical-surface bulge 302 under the traction of the roller blind fabric, and the inclination of each guide strip is equal to the inclination of the open slot in the guide channel.

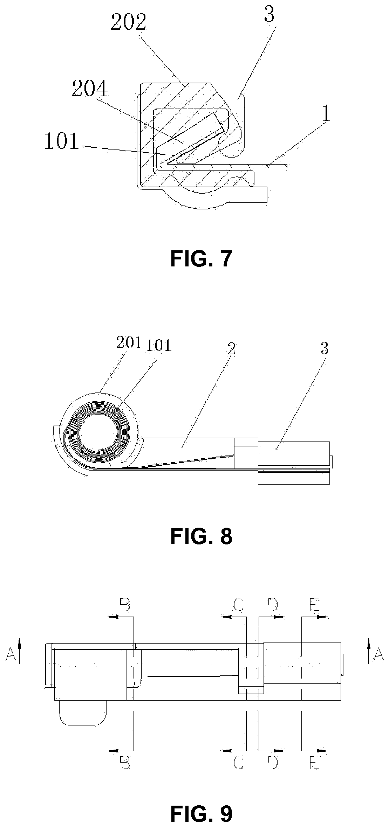

As shown in FIG. 1 to FIG. 7, and FIG. 16, the two ends of the roller blind fabric 1 of an automobile are the reinforcing belts 101, the reinforcing belts 101 are winding around the winding member 201 (the reinforcing belts are of a two-layer structure formed by the guide strips and the roller blind fabric), the end parts of the reinforcing belts get into the guide channel 202 through a communication part between the bottom of the winding member 201 and the guide channel 202, the reinforcing belts (including the guide strips and parts, on which the guide strips are glued, of the roller blind fabric) are guided by the overturning part to be overturned, and the bottoms of the front ends of the reinforcing belts are bent upwards and, are twisted for a half circle, and then penetrate through the open slot 204; at this point, the reinforcing belts changes from the previous single-layer extension to double-layer extension after being overturned, and an acute angle is formed between the double-layer extension and the roller blind fabric, wherein the upper layer of the double-layer extension is the reinforcing belts penetrating through the open slot 204, and the lower layer of the double-layer extension is the roller blind fabric; and the reinforcing belts are connected with the roller blind fabric at the opening of the open slot. The reinforcing belts get into the guide rail through a connection part between the open slot 204 and the cross section of the guide rail, and the cross section of the hollow part of the guide rail 3 is larger than and overlapped on the cross section of the open slot of the guide channel (as shown in FIG. 7), so the reinforcing belts, which are overturned to form a certain angle, may successfully get into the guide rail; and at this time, in the guide rail, the roller blind fabric extends from the guide rail opening 301, the reinforcing belts are under the traction of the roller blind fabric, one side of each reinforcing belt is propped against the vertical-surface bulge 302 in order to prevent each reinforcing belt from sliding out of the guide rail, and the bottom of the other side of each reinforcing belt is in contact with the horizontal-surface platform 306, so that the reinforcing belts are limited by the vertical-surface bulge 302 in the guide rail and extend under a condition that the reinforcing belts form an included angle with the roller blind fabric.

The reinforcing belts on the two sides of the roller blind fabric may also be any one of forms as shown in FIG. 19 to FIG. 25. After the reinforcing belts are overturned by the overturning part, parts, on which the guide strips (generally the guide strips adopt ultra-thin strip-shaped elastic metal pieces made of elastic memory metal) are originally glued, of the roller blind fabric are overturned to the above, and parts, which originally located beside the guide strips, of the roller blind fabric are overturned below the guide strips; and when the reinforcing belts slide in the guide rail, the two surfaces of each guide strip are coated with the roller blind fabric, and the metal pieces are not in direct contact with the guide rail, so that extending may be more smooth.

### Example 2: Separating type roller blind device for automobile sunroof

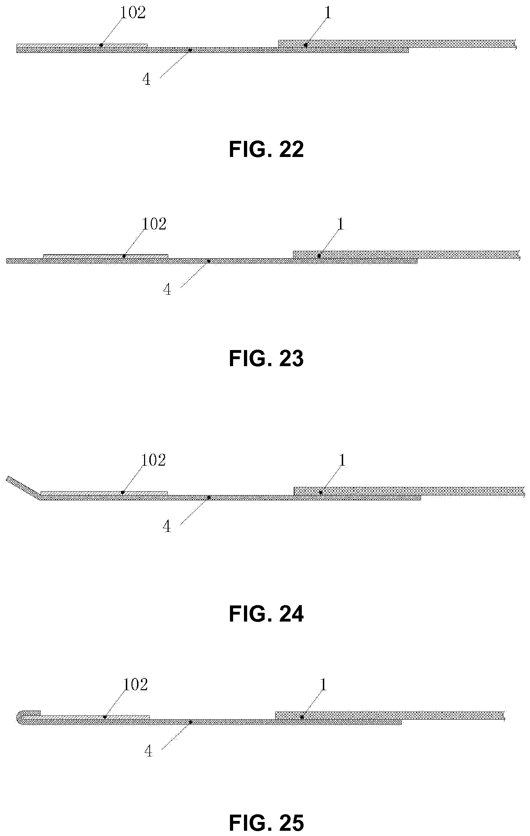

Example 2 is described in conjunction with accompanying drawings FIG. 8 to FIG. 15, and FIG. 17, and the structures of a roller blind fabric and reinforcing belts to be adopted are as shown in FIG. 25.

A roller blind device for automobile sunroof comprises a roller blind fabric 1, a reinforcing belt 101 is respectively formed on the two sides of the roller blind fabric in a main extension direction, each reinforcing belt comprises a guide strip 102 arranged on the roller blind fabric, and their specific connection manner may be as shown in FIG. 25. A connecting fabric 4 is respectively glued or sewn on the lower surfaces of the two sides of the roller blind fabric 1 in the main extension direction, and the guide strips 102 are glued on the upper surfaces of the connecting fabrics. By taking the main extension direction of the roller blind fabric as reference, a position relation between the edges of outer sides of the connecting fabrics 4 and the edges of the outer sides of the corresponding guide strips 102 is as follows: the edges of the outer sides of the connecting fabrics are protruded out of the edges of the outer sides of the guide strips and are folded upwards and then connected with (or glued on) the upper surfaces of the guide strips, and the position relations may also be the following manners: the edges of the outer sides of the connecting fabrics are leveled with the edges of the outer sides of the guide strips, or the edges of the outer sides of the connecting fabrics are protruded out of the edges of the outer sides of the guide strips, or the edges of the outer sides of the connecting fabrics are protruded out of the edges of the outer sides of the guide strips and tilt up towards the upper surfaces of the guide strips. In order to greatly describe the example, the following position relation is adopted: the edges of the outer sides of the connecting fabrics are protruded out of the edges of the outer sides of the guide strips and are folded upwards and then connected with the upper surfaces of the guide strips. The thickness of each connecting fabric 4 may be equal to, or smaller than, or larger than the thickness of the roller blind fabric 1, and in the example, it is selected that the thickness of each connecting fabric 4 is smaller than the thickness of the roller blind fabric 1.

A winding guide assembly 2 comprises a winding member 201 and a guide channel 202, both of which are sequentially arranged in the main extension direction of the roller blind fabric, an entrance end of the guide channel communicates with the bottom of the winding member to form a communication part through which the reinforcing belts 101 winding around the winding member may get into or get out of the guide channel 202, and a deformation part 203 capable of guiding the reinforcing belts to deform is formed in the guide channel. In the example, a deformation part is a separating part 203b provided with a separating opening 203b1 (as shown in FIG. 8, FIG. 9, FIG. 10 and FIG. 17), the separating part is arranged at an exit end of a guide channel, and the separating opening and an opening of an open slot 204 are in communication and have the same shape. The open slot 204 for guiding the reinforcing belts to get into or get out of a guide rail is formed in an exit end of the guide channel, the opening of the open slot communicates with the bottom of the guide channel in a manner of inclining from the upper part to the lower part and from one side close to a reference line, and an acute angle is formed between the open slot and the bottom of the guide channel.

The interior of the guide rail is hollow, a guide rail opening 301 for allowing extending of the roller blind fabric is formed in one side edge, close to the reference line, of the guide rail, and the cross section of the hollow part of the guide rail is larger than and overlapped on the cross section of the open slot of the guide channel; and the reinforcing belts 101 on the roller blind fabric are winding and unwinding around the winding member 201, and get into the guide rail 3 through the open slot 204 after being guided to deform by the guide channel 202, and the reinforcing belts are guided by the guide rail and slide along the guide rail.

The cross section of the guide rail 3 is of a square structure (the cross section of the guide rail 3 may also be designed to be other shapes according to actual requirements, such as a triangle shape and the like), and the guide rail opening 301 is opened in a side bottom of one side, located towards the reference line, of the square structure. By taking one side, far away from the reference line, of the guide rail as an outer side, a vertical-surface bulge 302 is formed in an opening of the square structure towards the interior of the opening, a part, corresponding to the vertical-surface bulge, of the bottom edge of the square structure is sunken to form a sunken surface 303, the edge of the inner side of the sunken surface is protruded to form a circular-arc bulge 304, the edge of the outer side of the sunken surface extends outwards and then is connected with the outer side edge 305 of the square structure so as to form a horizontal-surface platform 306, the highest point of the circular-arc bulge is lower than the top surface of the horizontal-surface platform, the sunken surface 303 is located between the circular-arc bulge and the horizontal-surface platform, the guide strips 102 are inclined with the horizontal-surface platform 306 and are propped against the vertical-surface bulge 302 under the traction of the roller blind fabric, and the inclination of each guide strip is equal to the inclination of the open slot in the guide channel.

As shown in FIG. 8 to FIG. 15, and FIG. 17, the reinforcing belts are folded along with the edges of sides, on which the guide strips are located, of the roller blind fabric and then are commonly winding around the winding member; at this point, not only the reinforcing belts but also parts, which are located below the reinforcing belts after being folded, of the roller blind fabric are winding around the winding member; after the reinforcing belts 101 and the end parts of the roller blind fabric get into the guide channel 202 through the communication part between the bottom of the winding member 201 and the guide channel 202, parts of the reinforcing belts penetrate through the separating opening 203b1 of the separating part 203b, and then continuously the roller blind fabric is pulled in the main extension direction, so that the roller blind fabric drives the reinforcing belts to slide in the separating part to achieve separation of the reinforcing belts and the roller blind fabric winding around the winding member; after the reinforcing belts and the roller blind fabric are separated, the reinforcing belts get into the guide rail through the connection part between the open slot 204 and the cross section of the guide rail, and because the cross section of the hollow part of the interior of the guide rail 3 is larger than and overlapped on the cross section of the open slot of the guide channel, the separated reinforcing belts can successfully get into the guide rail. Therefore, when the roller blind fabric is wound, the originally unwound roller blind fabric and the reinforcing belts at the edges of the roller blind fabric are winding around the winding member, and when the roller blind fabric is unwound, the reinforcing belts and parts, located at the bottoms of the reinforcing belts, of the roller blind fabric may be separated.

## Claims

1. A roller blind device for automobile sunroof, comprising: a roller blind fabric (1), a winding guide assembly (2), and a guide rail (3);
wherein
reinforcing belts (101) are respectively formed on two sides of the roller blind fabric in a main extension direction, and each reinforcing belt comprises a guide strip (102) arranged on the roller blind fabric;
by taking a central symmetric line of the roller blind fabric in the main extension direction as reference, the winding guide assembly (2) comprises a winding member (201) and a guide channel (202), both of which are sequentially arranged in the main extension direction of the roller blind fabric;
an entrance end of the guide channel communicates with a bottom of the winding member to form a communication part through which the reinforcing belts (101) winding around the winding member can get into or get out of the guide channel;
a deformation part (203) capable of guiding the reinforcing belts to deform is formed in the guide channel, and an open slot (204) for guiding the reinforcing belts to get into or get out of a guide rail is formed in an exit end of the guide channel;
an opening of the open slot communicates with a bottom of the guide channel in a manner of inclining from an upper part to a lower part and from one side close to the reference line, and an acute angle is formed between the open slot and the bottom of the guide channel;
an interior of the guide rail is hollow, a guide rail opening (301) for allowing extending of the roller blind fabric is formed in one side edge, close to the reference line, of the guide rail, and the cross section of the hollow part of the guide rail is larger than and overlapped on the cross section of the open slot of the guide channel; and
the reinforcing belts (101) on the roller blind fabric are winding and unwinding around the winding member (201) and get into the guide rail through the open slot (204) after being guided to deform by the guide channel (202), and the reinforcing belts are guided by the guide rail (3) and slide along the guide rail.

2. The roller blind device for automobile sunroof of claim 1, **characterized in that** the deformation part (203) in the guide channel is an overturning part (203a), and the overturning part communicates with an opening of the open slot after the overturning part is bent upwards from a bottom of a front section of the guide channel and is twisted for a half circle.

3. The roller blind device for automobile sunroof of claim 1, **characterized in that** the deformation part (203) in the guide channel is a separating part (203b) provided with a separating opening (203b1), the separating part is arranged at an exit end of the guide channel, and the separating opening and the opening of the open slot (204) are in communication and have the same shape.

4. The roller blind device for automobile sunroof of claim 1, **characterized in that** the cross section of the guide rail (3) is of a square structure, and the guide rail opening (301) is opened in a side bottom of one side, located towards the reference line, of the square structure.

5. The roller blind device for automobile sunroof of claim 4, **characterized in that** by taking one side, far away from the reference line, of the guide rail as an outer side, a vertical-surface bulge (302) is formed in an opening of the square structure towards the interior of the opening, a part, corresponding to the vertical-surface bulge, of the bottom edge of the square structure is sunken to form a sunken surface (303), an edge of an inner side of the sunken surface is protruded to form a circular-arc bulge (304), an edge of an outer side of the sunken surface extends outwards and then is connected with an outer side edge (305) of the square structure to form a horizontal-surface platform (306), a highest point of the circular-arc bulge is lower than a top surface of the horizontal-surface platform, the sunken surface is located between the circular-arc bulge and the horizontal-surface platform, the guide strips (102) are inclined with the horizontal-surface platform (306) and are propped against the vertical-surface bulge (302) under the traction of the roller blind fabric, and the inclination of each guide strip is equal to the inclination of the open slot in the guide channel.

6. The roller blind device for automobile sunroof of claim 1, **characterized in that** the guide strips (102) are respectively glued on the upper surface of the two sides of the roller blind fabric (1) in the main extension direction.

7. The roller blind device for automobile sunroof of claim 6, **characterized in that** by taking the main extension direction of the roller blind fabric as reference, a position relation between edges of the two sides of the roller blind fabric (1) and edges of outer sides of corresponding guide strips (102) is one of the following position relations: the edges of the two sides of the roller blind fabric are level with the edges of the outer sides of the corresponding guide strips, or the edges of the two sides of the roller blind fabric are protruded out of the edges of the outer sides of the corresponding guide strips, or the edges of the two sides of the roller blind fabric are protruded out of the edges of the outer sides of the corresponding guide strips and tilt up towards the upper surfaces of the corresponding guide strips, or the edges of the two sides of the roller blind fabric are protruded out of the edges of the outer sides of the corresponding guide strips and are folded upwards and then connected with the upper surfaces of the corresponding guide strips.

8. The roller blind device for automobile sunroof of claim 1, **characterized in that** connecting fabrics (4) are respectively glued or sewn on lower surfaces of the two sides of the roller blind fabric (1) in the main extension direction, and the guide strips (102) are glued on upper surfaces of the connecting fabrics.

9. The roller blind device for automobile sunroof of claim 8, **characterized in that** by taking the main extension direction of the roller blind fabric as reference, a position relation between edges of outer sides of the connecting fabrics (4) and edges of outer sides of the corresponding guide strips (102) is one of the following position relations: the edges of the outer sides of the connecting fabrics are leveled with the edges of the outer sides of the guide strips, or the edges of the outer sides of the connecting fabrics are protruded out of the edges of the outer sides of the guide strips, or the edges of the outer sides of the connecting fabrics are protruded out of the edges of the outer sides of the guide strips and tilt up towards the upper surfaces of the guide strips, or the edges of the outer sides of the connecting fabrics are protruded out of the edges of the outer sides of the guide strips and are folded upwards and then connected with the upper surfaces of the guide strips.
